# EUROPEAN PATENT APPLICATION

(11) **EP 4 556 733 A1**
(43) Date of publication of application: **21.05.2025**
(21) Application number: 22951213.2
(22) Date of filing: 29.08.2022
(51) Int. Cl.: F16C 33/64, C23C 8/10, F16C 19/10, F16C 33/58

(54) **ROLLING BEARING AND METHOD FOR PRODUCING SAME**

(30) Priority: 11.07.2022 JP 2022111257
(71) Applicant: NSK Ltd., Tokyo 141-8560 (JP)
(72) Inventor: OKAZAKI Tsuyoshi, Fujisawa-shi, Kanagawa 251-8501 (JP); TANAKA Yuki, Fujisawa-shi, Kanagawa 251-8501 (JP)
(74) Representative: Grünecker Patent- und Rechtsanwälte PartG mbB
(86) International application number: PCT/JP2022/032467
(87) International publication number: WO 2024/014007

(57) **Abstract**

Provided is a rolling bearing that can have an oxide film having excellent durability and that can minimize occurrence of brittle fracture due to hydrogen, thereby being able to improve durability of raceway surfaces and rolling elements. The rolling bearing is provided with a first bearing ring (11) having a first raceway surface (13), a second bearing ring (12) having a second raceway surface (14), and a plurality of rolling elements (15) held in a rollable manner between the first raceway surface (13) and the second raceway surface (14). At least either one of the first raceway surface (13) and the second raceway surface (14) or the rolling element (15) has, on the surface thereof, an oxide film (17) containing Fe₃O₄. The thickness of the oxide film is 0.6-2.0 µm, and the crystallite size of Fe₃O₄ calculated from a peak belonging to a plane (311) thereof is 2.5-3.2 nm.

## Description

### TECHNICAL FIELD

The present invention relates to a rolling bearing and a method for producing the rolling bearing.

### BACKGROUND ART

When a rolling bearing is used under a condition where water may get in, under a condition involving sliding, or under a condition where electricity is applied, hydrogen is generated due to the decomposition of water or lubricant. The generated hydrogen penetrates into the steel material forming the rolling bearing, causing hydrogen embrittlement.

Therefore, in order to prevent hydrogen embrittlement caused by the penetration of hydrogen, a rolling bearing having an oxide film formed on the surface has been proposed. For example, Patent Literature 1 discloses a rolling bearing provided with, on a surface of a rolling component forming the rolling bearing, an oxide film that reduces occurrence of a hydrogen generation reaction.

Further, in a case of a rolling bearing that supports a rotation shaft inside a housing, creep may occur between an outer ring and the housing, which can cause wear on an inner circumferential surface of the housing. Therefore, for example, Patent Literature 2 discloses a rolling bearing including an inner ring, an outer ring, and a plurality of rolling elements interposed between the inner ring and the outer ring, in which a black oxide film having a network of cracks is formed on a surface of a predetermined surface.

Patent Literature 2 describes that creep, which tends to occur in a state where a radial load acting on the rolling bearing is a no-load or light load, is prevented, and wear on an inner circumferential surface of the housing can be reduced.

### CITATION LIST

### PATENT LITERATURE

Patent Literature 1: JP2019-039523A
Patent Literature 2: JP2019-113126A

### TECHNICAL PROBLEM

Patent Literature 1 describes that by making a thickness of the oxide film on the surface of the rolling component 0.5 µm or more, even if the oxide film wears away, new surfaces are less likely to be created on the rolling component, and the hydrogen generation reaction can be reduced. Patent Literature 2 describes that durability is improved by making a film thickness of the black oxide film larger than 1 µm.

However, even if the thickness of the oxide film (black oxide film) is controlled within the above range, the durability of the oxide film is not sufficient. If the oxide film is damaged, hydrogen penetrates into the steel material, resulting in the production of white structure. This becomes a starting point for peeling off of a raceway surface and the surface of the rolling element of the rolling bearing.

The present invention has been made in view of the above problems, and an object of the present invention is to provide a rolling bearing in which a highly durable oxide film is obtained to reduce occurrence of hydrogen embrittlement fracture, thereby improving durability of a raceway surface and rolling elements, and a method for producing the rolling bearing.

### SOLUTION TO PROBLEM

As a result of intensive studies to solve the above problems, the present inventors have found that main damage modes of an oxide film formed on the raceway surface or the rolling element of the rolling bearing are "film wear" and "film destruction", and the durability of the oxide film varies greatly depending on processing conditions and a film thickness when the oxide film is formed. The term "film wear" refers to a phenomenon in which the oxide film is almost uniformly damaged, and the term "film destruction" refers to a phenomenon in which the oxide film is unevenly damaged, such as intra-film peeling and interfacial peeling.

Further, the present inventors have found that the damage mode of "film wear" varies depending on the crystallite size of Fe₃O₄ that constitutes the oxide film, and the damage mode of "film destruction" varies with residual stress, which is caused by the film thickness of the oxide film.

That is, the smaller the crystallite size of Fe₃O₄, the denser the film becomes, and the more the film wear can be reduced, and the thinner the oxide film, the more the film destruction can be reduced. The present disclosure has been made based on these findings.

A rolling bearing according to the present invention has the following configuration [1].
[1] A rolling bearing including:
   a first raceway ring having a first raceway surface;
   a second raceway ring having a second raceway surface; and
   a plurality of rolling elements held between the first raceway surface and the second raceway surface in a freely rollable manner,
   wherein an oxide film containing Fe₃O₄ is provided on at least one of surfaces of the first raceway surface and the second raceway surface and surfaces of the rolling elements,
   wherein a film thickness of the oxide film is 0.6 µm or more and 2.0 µm or less, and
   wherein a crystallite size calculated from a peak attributable to the (311) plane of the Fe₃O₄ is 2.5 nm or more and less than 3.2 nm.
   A preferred embodiment of the rolling bearing according to the present invention has the following configuration [2].
[2] In the rolling bearing according to [1], the oxide film is formed on the surfaces of the first raceway surface and the second raceway surface, and on the surfaces of the rolling elements.
   A method for producing a rolling bearing according to the present invention has the following configuration [3].
[3] A method for producing a rolling bearing, the rolling bearing being according to [1] or [2], the method including:
   a step of forming an oxide film containing Fe₃O₄ on at least one of surfaces of the first raceway surface and the second raceway surface and surfaces of the rolling elements,
   wherein a film formation rate of the oxide film is 0.003 µm/min or more and 0.034 µm/min or less.

### ADVANTAGEOUS EFFECTS OF INVENTION

According to the present invention, since the film thickness of the oxide film and the crystallite size of Fe₃O₄ that constitutes the oxide film are appropriately controlled, it is possible to provide a rolling bearing in which a highly durable oxide film is obtained to reduce occurrence of hydrogen embrittlement fracture, thereby improving durability of a raceway surface and rolling elements, and a method for producing the rolling bearing.

### BRIEF DESCRIPTION OF DRAWINGS

[Fig. 1] Fig. 1 is a cross-sectional view showing a rolling bearing according to an embodiment of the present invention.
[Fig. 2] Fig. 2 is a cross-sectional view schematically showing a damage testing device.
[Fig. 3] Fig. 3 is a graph showing the effect of crystallite size on damage resistance, with the vertical axis representing an initial film thickness (µm) and damaged film thickness (µm) of a black dyed film and the horizontal axis representing the crystallite size (nm).
[Fig. 4] Fig. 4 is a graph showing the effect of crystallite size on damage resistance with an approximate straight line, with the vertical axis representing the damaged film thickness (µm) of the black dyed film and the horizontal axis representing the crystallite size (nm).
[Fig. 5] Fig. 5 is a graph showing a relationship between a film formation rate and the crystallite size of Fe₃O₄ with an approximate straight line, with the vertical axis representing the film formation rate (µm/min) of the black dyed film and the horizontal axis representing the crystallite size (nm).
[Fig. 6] Fig. 6 is a graph showing the effect of film thickness on damage resistance, with the vertical axis representing the initial film thickness (µm) and damaged film thickness (µm) of the black dyed film and the horizontal axis representing the initial film thickness (µm) of the black dyed film.
[Fig. 7] Fig. 7 is a graph showing the effect of initial film thickness on damage resistance, with the vertical axis representing an average damage rate (%) and the horizontal axis representing the initial film thickness (µm).
[Fig. 8A] Fig. 8A is a photograph showing a state of peeling when the initial film thickness of the black dyed film is 0.42 µm.
[Fig. 8B] Fig. 8B is a photograph showing a state of peeling when the initial film thickness of the black dyed film is 0.84 µm.
[Fig. 8C] Fig. 8C is a photograph showing a state of peeling when the initial film thickness of the black dyed film is 1.83 µm.
[Fig. 8D] Fig. 8D is photograph showing a state of peeling when the initial film thickness of the black dyed film is 1.97 µm.
[Fig. 9] Fig. 9 is a graph showing the effect of initial film thickness on film destruction, with the vertical axis representing an average peeling distance (µm) and the horizontal axis representing the initial film thickness (µm) of the black dyed film.
[Fig. 10] Fig. 10 is a graph showing a relationship between an initial film thickness and a crystallite size for each sample, with the vertical axis representing the initial film thickness (µm) and the horizontal axis representing the crystallite size (nm).
[Fig. 11] Fig. 11 is a graph showing the average damage rate (%) for each sample, with the vertical axis representing the average damage rate (%) and the horizontal axis representing a sample No.
[Fig. 12] Fig. 12 is a graph showing a relationship between the initial film thickness and a film formation rate for each sample, with the vertical axis representing the initial film thickness (µm) and the horizontal axis representing the film formation rate (µm/min).

### DESCRIPTION OF EMBODIMENTS

Hereinafter, an embodiment of the present disclosure will be described in detail. The present disclosure is not limited to the embodiment described below.

### [Rolling Bearing]

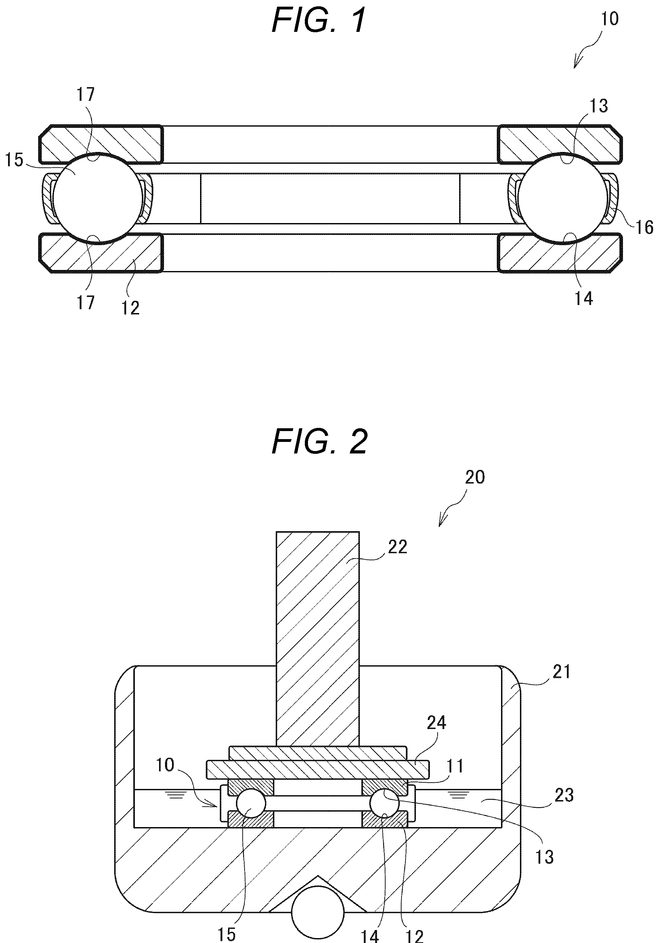

Fig. 1 is a cross-sectional view showing a rolling bearing according to an embodiment of the present invention. In the present embodiment, for example, a thrust bearing will be described as the rolling bearing.

As shown in Fig. 1, a thrust bearing 10 includes: a first raceway ring 11 having a first raceway surface 13; a second raceway ring 12 having a second raceway surface 14; and a plurality of rolling elements 15 held between the first raceway surface 13 and the second raceway surface 14 in a freely rollable manner. A cage 16 that holds the plurality of rolling elements 15 at predetermined intervals is disposed between the first raceway surface 13 and the second raceway surface 14.

In the present embodiment shown in Fig. 1, an oxide film 17 containing Fe₃O₄ is formed on each of the first raceway surface 13 and the second raceway surface 14. Further, a film thickness of the oxide film 17 and a crystallite size of Fe₃O₄ that constitutes the oxide film 17 are appropriately controlled. Since the oxide film 17 is formed by a process generally known as a "black dyeing process", hereinafter, a process of forming the oxide film 17 may be referred to as the "black dyeing process" and the oxide film 17 may be referred to as a "black dyed film". In the following, "crystallite size of Fe₃O₄" refers to a crystallite size calculated based on a peak attributable to the (311) plane of Fe₃O₄.

In the rolling bearing according to the present embodiment, it is necessary that the oxide film 17 containing Fe₃O₄ is formed on a surface of a predetermined region (specifically, at least one of the first and second raceway surfaces 13 and 14, and the rolling elements 15) in the thrust bearing 10. Accordingly, generation of hydrogen from the first raceway surface 13, the second raceway surface 14, and the rolling element 15 that constitute the thrust bearing 10 can be reduced, and generation of hydrogen embrittlement can be reduced. In addition, since the film thickness of the oxide film 17 and the crystallite size of Fe₃O₄ that constitutes the oxide film 17 are appropriately controlled, the durability of the oxide film 17 can be improved, and the durability of the first raceway surface 13, the second raceway surface 14, and the rolling element 15 can be improved.

Next, conditions for improving the durability of the black dyed film will be described below.

In order to improve the durability of the oxide film, it is important to prevent both "film wear" and "film destruction" described above. It is the crystallite size of Fe₃O₄ that affects the "film wear". Further, the crystallite size is affected by a film formation rate, and depends on a processing temperature and a processing liquid of the black dyeing process, and a type of the steel material to be subjected to the black dyeing process. Further, it is the residual stress that affects the "film destruction", and the residual stress is affected by the film thickness of the black dyed film. Further, the film thickness is affected by a processing time of the black dyeing process and the film formation rate.

In determining the durability, it is difficult to completely distinguish and measure "wear resistance" and "destruction resistance," so the two are collectively referred to as "damage resistance".

### <Relationship between Crystallite Size of Fe₃O₄ and Damage Resistance>

Hereinafter, results and discussion of Experiment 1 and Experiment 2, which were performed to investigate the relationship between the crystallite size of Fe₃O₄ and the damage resistance, are described below.

### (Experiment 1: Effect of Crystallite Size on Damage Resistance)

The film thickness of the oxide film formed by the black dyeing process was kept almost constant, and the crystallite size was changed by varying the film formation rate, and the effect of this on the damage resistance of the black dyed film was investigated. The crystallite size was measured by X-ray diffraction (XRD) using cobalt (Co) as a radiation source on the oxide film obtained by black dyeing process, and calculated using the Scherrer formula based on the peak attributable to the (311) plane of Fe₃O₄.

First, a black dyed film was formed on surfaces of the first raceway surface 13 and the second raceway surface 14 of the thrust bearing 10 made of SUJ2 steel material specified in JIS G 4805:2019. Specifically, the first raceway ring 11 and the second raceway ring 12 on which the black dyed film were to be formed were immersed in a processing liquid containing sodium hydroxide (NaOH) as a main component, and a black dyed film containing Fe₃O₄ was formed.

In Experiment 1, various crystallite sizes were set by the immersion process under various processing conditions using the same processing liquid.

Thereafter, a damage test was performed on the black dyed film using a damage testing device, and a film thickness before the test (initial film thickness) and a film thickness after the test were measured, and the damaged film thickness was calculated from a difference between the measured thicknesses.

Fig. 2 is a cross-sectional view schematically showing the damage testing device. A damage testing device 20 includes a container-shaped support base 21 having an open upper end, a rotation shaft 22 that rotates the thrust bearing 10, and a rotation disk 24 fixed to the rotation shaft 22. Further, lubricating oil 23 is fed into the support base 21.

In a damage test, the thrust bearing 10 is disposed between an inner bottom surface of the support base 21 and the rotation disk 24, the second raceway ring 12 of the thrust bearing 10 is fixed to the inner bottom surface of the support base 21, and the first raceway ring 11 is fixed to the rotation disk 24. Thereafter, a pressure is applied to the thrust bearing 10 by the rotation shaft 22 via the rotation disk 24, the thrust bearing 10 is rotated at a predetermined rotation speed, and then the film thickness of the black dyed film after the test is measured.

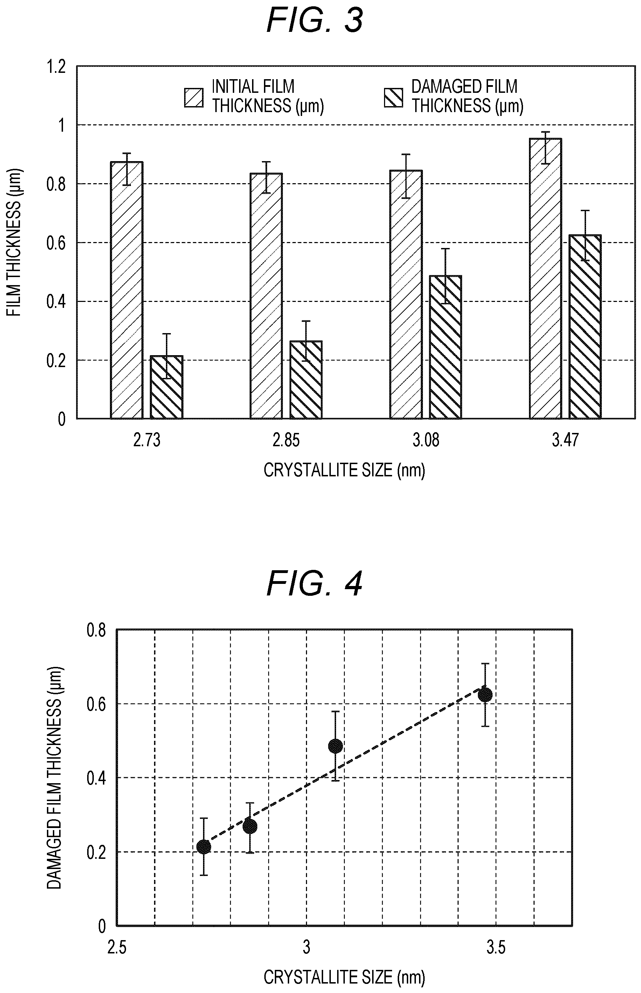

Fig. 3 is a graph showing the effect of crystallite size on damage resistance, with the vertical axis representing an initial film thickness (µm) and damaged film thickness (µm) of a black dyed film and the horizontal axis representing the crystallite size (nm).

Fig. 4 is a graph showing the effect of crystallite size on damage resistance with an approximate straight line, with the vertical axis representing the damaged film thickness (µm) of the black dyed film and the horizontal axis representing the crystallite size (nm).

The initial film thickness is 0.83 µm to 0.96 µm, and the crystallite sizes are 2.73 nm, 2.85 nm, 3.08 nm, and 3.47 nm.

As shown in Fig. 3, when the film thickness was kept almost constant at 0.9±0.1 µm, the damaged film thickness increased as the crystallite size increased.

As shown in Fig. 4, the crystallite size and the damaged film thickness were in a proportional relationship. These results show that when compared at the same film thickness, films with smaller crystallite size have better damage resistance.

### (Experiment 2: Effect of Film Formation Rate on Damage Resistance)

Next, of the thrust bearings produced in Experiment 1, the effect of the film formation rate was investigated for thrust bearings with the crystallite size of 2.73 nm, 2.85 nm, 3.08 nm, and 3.47 nm. The film formation rate is the film thickness of the oxide film formed per unit time (µm/min).

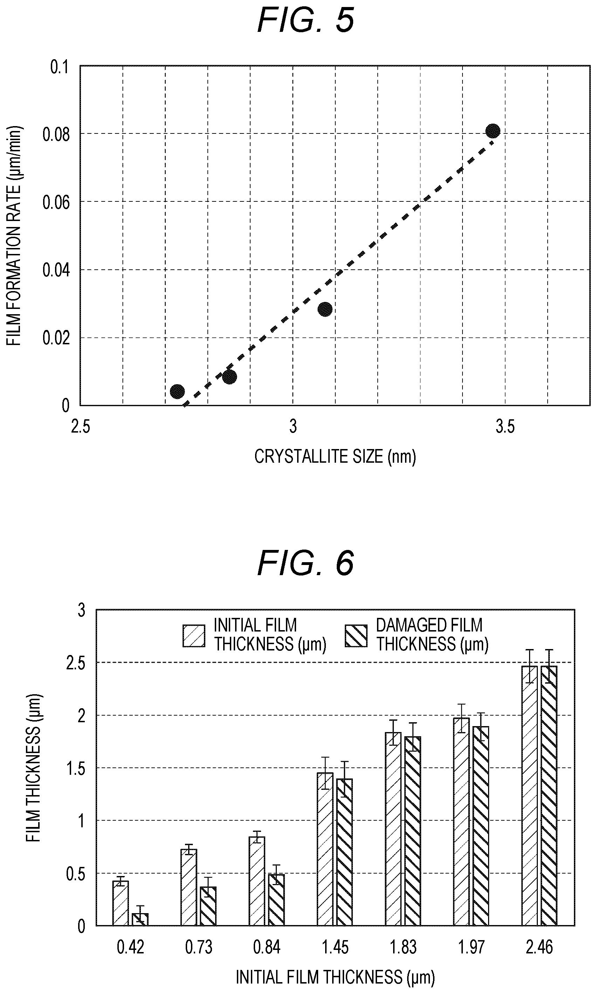

Fig. 5 is a graph showing a relationship between the film formation rate and the crystallite size of Fe₃O₄ with an approximate straight line, with the vertical axis representing the film formation rate (µm/min) of the black dyed film and the horizontal axis representing the crystallite size (nm). As in Experiment 1, the crystallite size was measured by X-ray diffraction using cobalt (Co) as a radiation source, and calculated using the Scherrer formula based on the peak attributable to the (311) plane of Fe₃O₄.

As shown in Fig. 5, it was determined that the crystallite size of Fe₃O₄ during the black dyeing process was proportional to the film formation rate. As described above, the crystallite size and the film formation rate are in a proportional relationship, and the crystallite size and the damaged film thickness are also in a proportional relationship. Therefore, it was shown that the lower the film formation rate, the smaller the crystallite size and the better the damage resistance.

Experiment 1 and Experiment 2 were conducted to mainly investigate factors that affect "film wear". On the other hand, Experiment 3 shown below mainly investigates factors that affect "film destruction".

### <Relationship between Film Thickness of Black Dyed Film and Damage Resistance>

Subsequently, results and discussion of Experiment 3 and Experiment 4, which were performed to investigate the relationship between the film thickness of black dyed film and the damage resistance, are described below.

### (Experiment 3: Effect of Film Thickness of Black Dyed Film on Damage Resistance)

In the black dyeing process, the same processing liquid and processing conditions were used, the crystallite size was kept constant by keeping the film formation rate constant, and the processing time was varied to change the film thickness, and the effect of this on the damage resistance was investigated.

First, the black dyed film was formed on the surfaces of the first raceway surface 13 and the second raceway surface 14 of the thrust bearing 10 in the same manner as in Experiment 1. The crystallite size was 3±0.04 nm, and a damage test similar to that in Experiment 1 was performed on the resulting thrust bearings 10 having various film thicknesses.

Fig. 6 is a graph showing the effect of film thickness on damage resistance, with the vertical axis representing the initial film thickness (µm) and damaged film thickness (µm) of the black dyed film and the horizontal axis representing the initial film thickness (µm) of the black dyed film.

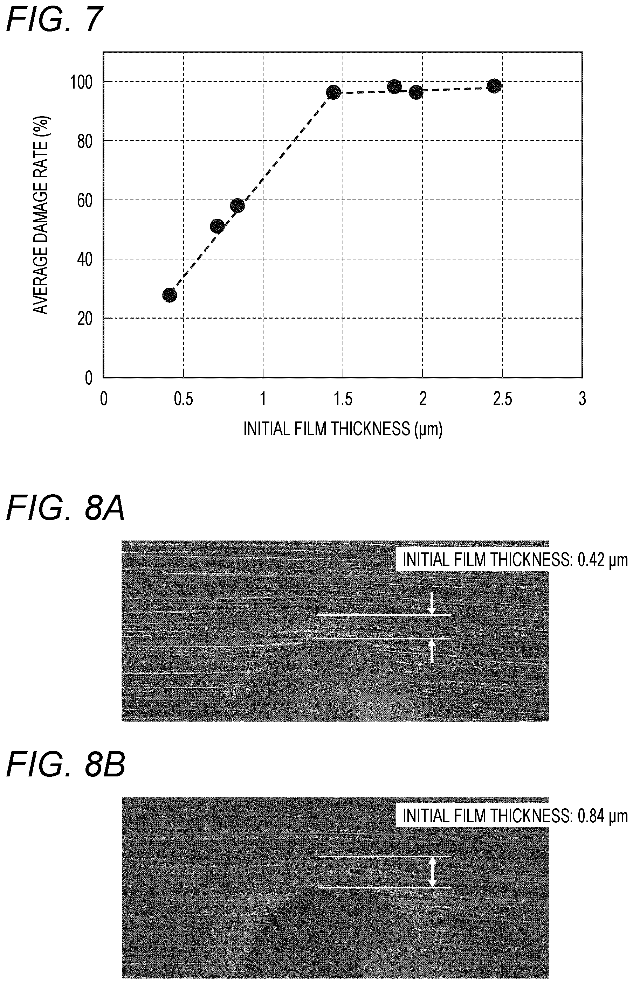

Fig. 7 is a graph showing the effect of initial film thickness on damage resistance, with the vertical axis representing an average damage rate (%) and the horizontal axis representing the initial film thickness (µm).

It should be noted that, in Experiment 3, since the same processing liquid was used during the black dyeing process and the film formation rate was constant, the film quality, that is, the crystallite size of Fe₃O₄, was almost the same. An average damage rate is a value calculated by [average damaged film thickness at multiple locations/initial film thickness].

As shown in Figs. 6 and 7, it can be seen that when the crystallite size of Fe₃O₄ is substantially the same, the thinner the initial film thickness of the black dyed film, the better the damage resistance.

### (Experiment 4: Effect of Film Thickness of Black Dyed Film on Film Destruction Resistance)

The film thickness of the black dyed film was varied to investigate the effect on damage resistance, especially on film destruction. Specifically, first, in the same manner as in Experiment 3, thrust bearings 10 having black dyed films of various thicknesses were produced. Next, five indentations were made on the surface of the black dyed film using a load and indenter specified for Rockwell hardness test scale C (HRC). Then, the black dyed film around the indentations was observed, and a distance (peeling distance) from the outermost edge of each indentation to a peeled region of the black dyed film was measured. The peeling distance was measured at four locations with respect to each of the five indentations, and the average was calculated.

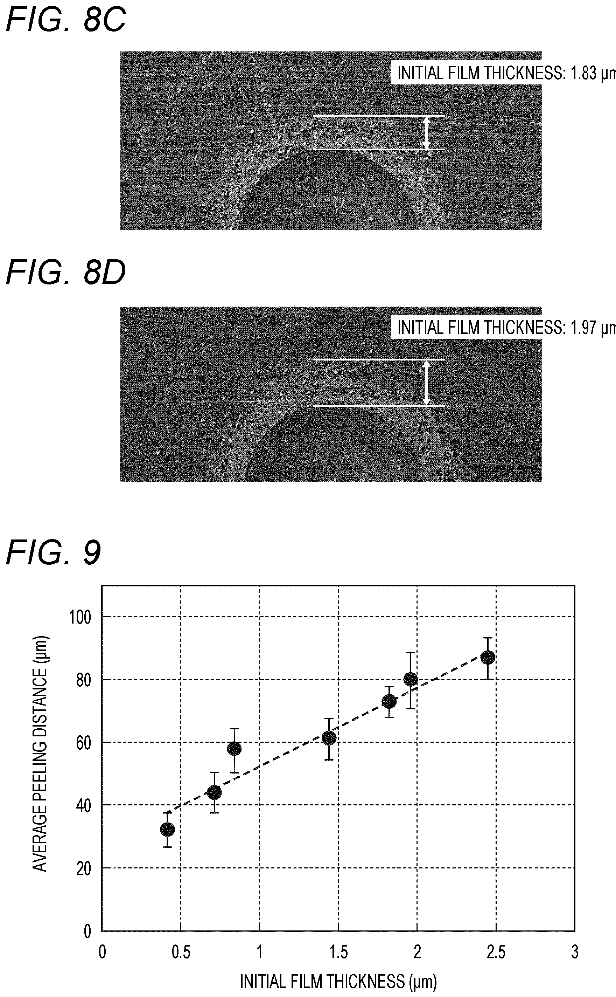

Figs. 8A to 8D are photographs showing states of peeling for the black dyed films of each initial film thickness. In Fig. 8A, the initial film thickness is 0.42 µm. In Fig. 8B, the initial film thickness is 0.84 µm. In Fig. 8C, the initial film thickness is 1.83 µm. In Fig. 8D, the initial film thickness is 1.97 µm. An example of the peeling distance is indicated by an arrow in the drawings.

Fig. 9 is a graph showing the effect of the initial film thickness on the film destruction, with the vertical axis representing the average peeling distance (µm) and the horizontal axis representing the initial film thickness (µm) of the black dyed film.

As shown in Figs. 8A to 8D and Fig. 9, it is found that the initial film thickness of the black dyed film and the average peeling distance are in a proportional relationship. The black dyed film is a film obtained by oxidizing Fe to form Fe₃O₄, and a volume of the film expands when Fe₃O₄ is formed. Therefore, the black dyed film has residual stress, and the thicker the black dyed film, the greater the volume expansion and the greater the residual stress. The peeling distance shown in Fig. 8A to Fig. 8D and Fig. 9 is considered to be caused by the residual stress of the black dyed film, and it was shown that the thinner the initial film thickness, the better the film destruction resistance.

Based on the consideration obtained from Experiments 1 to 4, a preferable range of the film thickness and the crystallite size of Fe₃O₄ that can improve the damage resistance of the black dyed film was obtained. The reason for this will be described below.

### [Film Thickness of Black Dyed Film: 0.6 µm or more and 2.0 µm or less]

The film thickness of the black dyed film particularly affects the film destruction resistance. If the film thickness is less than 0.6 µm, the black dyed film becomes too thin, the lifetime against damage becomes short, and the effect of preventing the hydrogen generation reaction is reduced. Therefore, the thickness of the black dyed film is preferably 0.6 µm or more.

Further, if the film thickness exceeds 2.0 µm, film destruction of the black dyed film tends to occur, and the durability is reduced. Therefore, the film thickness of the black dyed film is 2.0 µm or less, preferably 1.5 µm or less, more preferably 1.2 µm or less, and still more preferably 0.8 µm or less.

### [Crystallite Size of Fe₃O₄: 2.5 nm or more and 3.2 nm or less]

The crystallite size of Fe₃O₄ particularly affects the film wear resistance. The crystallite size of Fe₃O₄ is greatly affected by the film formation rate. Therefore, if the crystallite size of Fe₃O₄ is made less than 2.5 nm, the film formation takes too much time, resulting in a decrease in productivity. Therefore, the crystallite size of Fe₃O₄ is 2.5 nm or more, and preferably 2.7 nm or more.

Further, if the crystallite size of Fe₃O₄ exceeds 3.2 nm, the desired damage resistance of the black dyed film cannot be obtained. Therefore, the crystallite size of Fe₃O₄ is 3.2 nm or less, preferably 3.0 nm or less, and more preferably 2.9 nm or less.

In the above embodiment, an example is shown in which the thrust bearing 10 is used as the rolling bearing on which the black dyed film (oxide film 17) is formed. However, the present invention is not limited to the thrust bearing 10, and can also be applied to, for example, a radial bearing.

In addition, the region where the oxide film 17 is formed is not limited to the raceway surface (the first raceway surface 13 and the second raceway surface 14) as described in the above embodiment, but may be a surface side of the rolling element 15, or may be formed on both. In order to more effectively prevent the occurrence of hydrogen embrittlement fracture, the oxide film 17 is preferably formed on both the first raceway surface 13, the second raceway surface 14, and the surface of the rolling element 15. Further, the rolling elements 15 may be balls or rollers. Further, the number of times of the black dyeing process may be only one, or may be a plurality of times.

In the above embodiment, an example using SUJ2 steel material has been shown, but the present invention is not limited to SUJ2 steel material, and can also be applied to a steel material that can be subjected to the black dyeing process.

### [Method for Producing Rolling Bearing]

A method for producing a rolling bearing according to the present embodiment is a method for producing the rolling bearing, and includes a step of forming a black dyed film (oxide film 17) containing Fe₃O₄ on at least one of surfaces of the first and second raceway surfaces 13 and 14 and surfaces of the rolling elements 15. Conditions for the method for producing the rolling bearing according to the present embodiment will be described below.

### [Film Formation Rate of Black Dyed Film: 0.003 µm/min or more and 0.034 µm/min or less]

As described above, the film formation rate of the black dyed film greatly affects the crystallite size of Fe₃O₄. The smaller the crystallite size of Fe₃O₄, the better the damage resistance. However, if the film formation rate is less than 0.003 µm/min, the productivity decreases. Therefore, the film formation rate of the black dyed film is 0.003 µm/min or more.

On the other hand, if the film formation rate of the black dyed film exceeds 0.034 µm/min, the crystallite size of Fe₃O₄ exceeds 3.2 nm, and the desired damage resistance cannot be obtained. Therefore, the film formation rate of the oxide film is set to 0.034 µm/min or less, and preferably 0.026 µm/min or less.

### [Examples]

The thrust bearing 10 shown in Fig. 1 was produced by using a SUJ2 steel material specified in JIS G 4805:2019, and thrust races constituting the first raceway surface 13 and the second raceway surface 14 were subjected to a black dyeing process under various processing conditions to form oxide films 17 containing Fe₃O₄ having various crystallite sizes.

The crystallite size of Fe₃O₄ was appropriately adjusted by controlling the film formation rate of the oxide film 17. The thrust bearing 10 had an inner diameter of 25 mm, an outer diameter of 52 mm, and a width of 18 mm, and used six rolling elements 15 with a diameter of 3/8 inch.

The processing conditions for the black dyeing process, the film formation rate, and the crystallite size of Fe₃O₄ are shown in Table 1 below. Processing liquid A, processing liquid B, and processing liquid C shown in the following Table 1 have different compositions, each containing NaOH as a main component, and are generally used as processing liquids for the black dyeing process. Sample No. (2) was subjected to two consecutive black dyeing processes at different processing speeds for 30 minutes each in accordance with DIN 50938:2018-01. The other samples were subjected to one black dyeing process.

The crystallite size was measured by the same method as in Experiment 1.

Next, the initial film thickness of the black dyed film was measured for each of the obtained thrust bearings 10, which are samples No. (1) to (11), and then the damage test was performed on the black dyed film three times (n = 3) for each condition using the damage testing device 20 shown in Fig. 2. The damage testing device 20 was rotated for five days at the following rotation speeds while applying pressure to the thrust bearing 10.

Specific conditions for the damage test are shown below. The "number of stress cycles" described below refers to the number of times that the rolling elements pass through a predetermined position in the raceway ring.
Surface pressure: 2.2 (GPa)
Lubricant viscosity (ISO viscosity grade number): VG 68
Rotation speed: 1000 (rpm)
Number of stress cycles: 2.16 × 10⁷ (times)

After the damage test, the thrust races of the samples were cut, and remaining black dyed films (remaining film thicknesses) were measured at four positions using a scanning electron microscope (SEM). The film thickness of the black dyed film in a region where the rolling element does not come into contact is defined as the initial film thickness (µm), the average damaged film thickness (µm) is calculated by subtracting the remaining thickness at each point from the initial film thickness and averaging the results, and the average damaged film thickness was divided by the initial film thickness and multiplied by 100 to obtain the average damage rate (%). The initial film thicknesses and the results of the damage test are shown in Table 1 below.

**[Table 1]**

| Sample No. | Processing liquid | Number of times of process (times) | Film formation rate (µm/min) | Crystallite size (nm) | Initial film thickness (µm) | Average damaged film thickness (µm) | Average damage rate (%) |
|---|---|---|---|---|---|---|---|
| (1) | Processing liquid A | 1 | 0.012 | 2.86 | 0.74 | 0.20 | 27.03 |
| (2) | Processing liquid B | 2 | 0.019 | 2.85 | 1.15 | 0.74 | 64.35 |
| (3) | Processing liquid C | 1 | 0.024 | 2.98 | 0.65 | 0.20 | 30.77 |
| (4) | Processing liquid A | 1 | 0.022 | 2.99 | 1.97 | 1.89 | 95.95 |
| (5) | Processing liquid A | 1 | 0.028 | 3.08 | 0.84 | 0.49 | 58.33 |
| (6) | Processing liquid A | 1 | 0.032 | 3.03 | 1.45 | 1.39 | 95.86 |
| (7) | Processing liquid A | 1 | 0.006 | 2.76 | 0.78 | 0.13 | 16.67 |
| (8) | Processing liquid A | 1 | 0.021 | 3.04 | 2.46 | 2.46 | 100.00 |
| (9) | Processing liquid A | 1 | 0.035 | 3.28 | 1.23 | 1.23 | 100.00 |
| (10) | Processing liquid A | 1 | 0.066 | 3.56 | 1.32 | 1.32 | 100.00 |
| (11) | Processing liquid A | 1 | 0.136 | 4.04 | 0.95 | 0.95 | 100.00 |

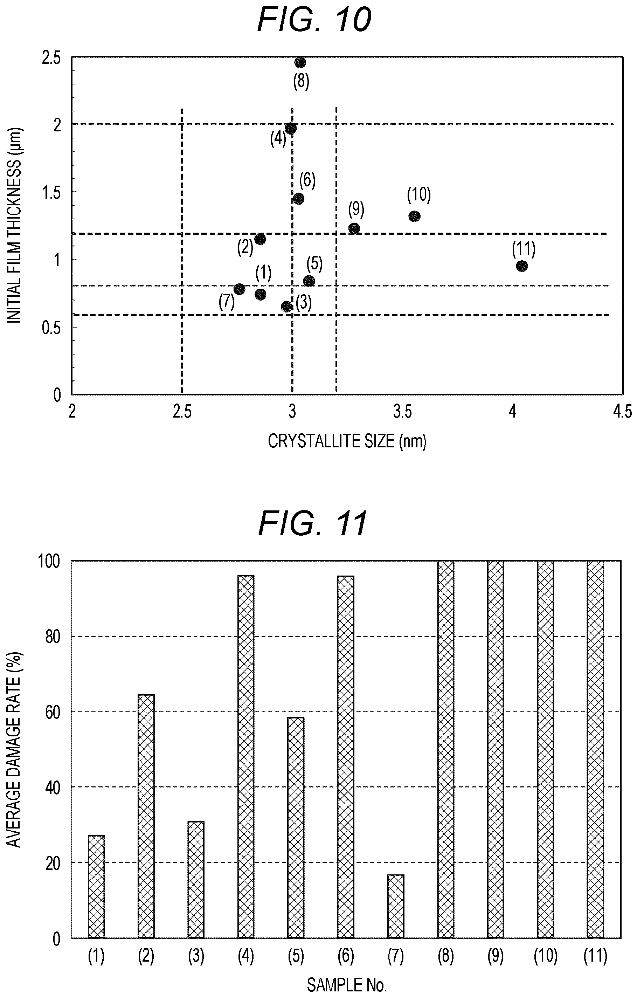

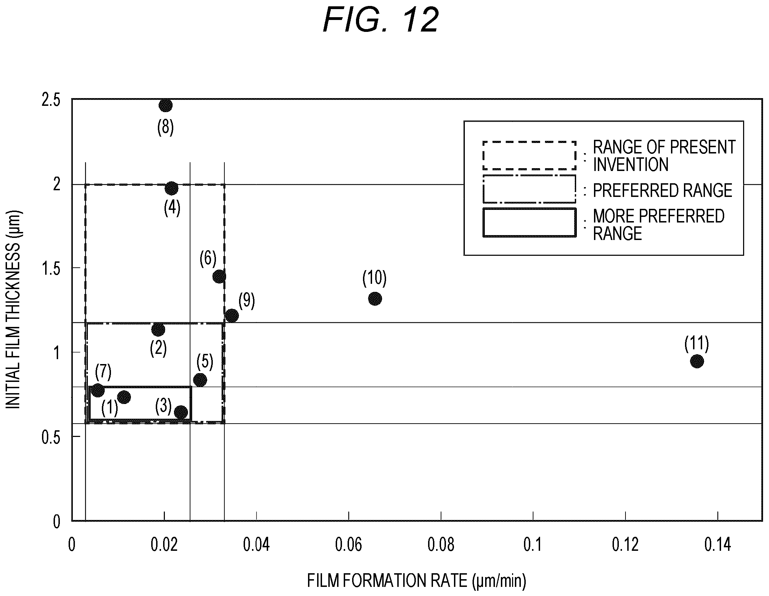

Fig. 10 is a graph showing a relationship between the initial film thickness and the crystallite size for each sample, with the vertical axis representing the initial film thickness (µm) and the horizontal axis representing the crystallite size (nm). Fig. 11 is a graph showing the average damage rate (%) for each sample, with the vertical axis representing the average damage rate (%) and the horizontal axis representing a sample No. Further, Fig. 12 is a graph showing a relationship between the initial film thickness and the film formation rate for each sample, with the vertical axis representing the initial film thickness (µm) and the horizontal axis representing the film formation rate (µm/min).

As shown in Table 1 and Figs. 10 to 12, in sample No. (8), the film thickness (initial film thickness) of the black dyed film exceeded the upper limit of the range of the present invention, and therefore the average damage rate was 100%, indicating that a black dyed film with poor durability was formed. In samples No. (9) to (11), the crystallite size of the black dyed film exceeded the upper limit of the range of the present invention, and therefore the average damage rate was 100%, indicating that a black dyed film with poor durability was formed.

On the other hand, in all of samples No. (1) to (7), the film formation rate was appropriately controlled, and a black dyed film having a desired initial film thickness of 0.6 µm or more and 2.0 µm or less was formed. Therefore, the crystallite size of Fe₃O₄ was 2.5 nm or more and 3.2 nm or less. Accordingly, for the samples No. (1) to (7), regardless of the processing liquid and the number of processes, the black dyed film remained even after a severe damage test, and a black dyed film with good durability was obtained. Further, the time required for film formation was not too long, and the productivity was good.

In particular, as shown in Fig. 10, in the samples No. (1) to (3), No. (5), and No. (7), the initial film thickness was 1.2 µm or less, which is the more preferred upper limit of the present invention, and the crystallite size was 2.5 nm or more and 3.2 nm or less. Therefore, the average damage rate was 65% or less in all cases, and a black dyed film with excellent durability was obtained. Further, sample No. (7) had the smallest crystallite size, and therefore the time required for film formation was longer than those of samples No. (1) to (6), but the average damage rate was the lowest and the durability was excellent.

In addition, as shown in Fig. 12, in the samples No. (1) to (3), No. (5), and No. (7), the film formation rate was controlled to 0.003 µm/min to 0.034 µm/min, and the black dyed film was formed such that the initial film thickness was 1.2 µm or less, which is a more preferred range of the present invention. Therefore, the average damage rate was 65% or less in all cases, and a black dyed film with excellent durability was obtained. In particular, the film formation rate was set to a preferred range of 0.026 µm/min or less, and the black dyed film was formed such that the initial film thickness was 0.8 µm or less, which is a particularly preferred range. Therefore, the average damage rate was 40% or less in all cases, and the durability was further improved.

Although the embodiment and the variation thereof are described above with reference to the drawings, it is needless to mention that the present invention is not limited to these examples. It is apparent for those skilled in the art to which the present disclosure belongs that various modified examples or corrected examples are conceivable within the scope recited in the claims, and it is understood that the above falls within the technical scope of the present invention. In addition, within the scope not departing from the gist of the invention, each of the configuration elements in the above embodiments may be combined in any manner.

The present application is based on a Japanese patent application (No. 2022-111257) filed on July 11, 2022, contents of which are incorporated herein by reference.

### REFERENCE SIGNS LIST

10 thrust bearing
11 first raceway ring
12 second raceway ring
13 first raceway surface
14 second raceway surface
15 rolling element
16 cage
17 oxide film containing Fe₃O₄
20 damage testing device
21 support base
22 rotation shaft
23 lubricating oil
24 rotation disk

## Claims

1. A rolling bearing comprising:
a first raceway ring having a first raceway surface;
a second raceway ring having a second raceway surface; and
a plurality of rolling elements held between the first raceway surface and the second raceway surface in a freely rollable manner,
wherein an oxide film containing Fe₃O₄ is provided on at least one of surfaces of the first raceway surface and the second raceway surface and surfaces of the rolling elements,
wherein a film thickness of the oxide film is 0.6 µm or more and 2.0 µm or less, and
wherein a crystallite size calculated from a peak attributable to the (311) plane of the Fe₃O₄ is 2.5 nm or more and 3.2 nm or less.

2. The rolling bearing according to claim 1, wherein the oxide film is formed on the surfaces of the first raceway surface and the second raceway surface, and on the surfaces of the rolling elements.

3. A method for producing a rolling bearing, the rolling bearing being according to claim 1 or 2, the method comprising:
a step of forming an oxide film containing Fe₃O₄ on at least one of surfaces of the first raceway surface and the second raceway surface and surfaces of the rolling elements,
wherein a film formation rate of the oxide film is 0.003 µm/min or more and 0.034 µm/min or less.
